# EUROPÄISCHE PATENTSCHRIFT

(11) **EP 1 944 177 B1**
(45) Veröffentlichungstag und Bekanntmachung des Hinweises auf die Patenterteilung: **23.12.2009**
(21) Anmeldenummer: 07000692.9
(22) Anmeldetag: 15.01.2007
(51) Int. Cl.: B60C 25/138

(54) **Vorrichtung zum Montieren oder Demontieren eines Luftreifens von einer Felge eines Fahrzeugrades**
Device for mounting or dismounting a pneumatic tyre from the rim of a vehicle wheel
Dispositif destiné au montage ou au démontage d'un pneumatique d'une jante de roue de véhicule

(43) Veröffentlichungstag der Anmeldung: 16.07.2008
(73) Patentinhaber: Snap-on Equipment Srl a unico socio, 42015 Correggio (Reggio Emilia) (IT)
(72) Erfinder: Sotgiu, Paolo, 41100 Modena (IT)
(74) Vertreter: Eisenführ, Speiser & Partner

(56) Entgegenhaltungen:
- EP-A- 1 593 533
- EP-A- 1 714 807

## Beschreibung

Die Erfindung betrifft eine Vorrichtung zum Montieren Demontieren eines Luftreifens von einer Felge eines Fahrzeugrades nach dem Oberbegriff des Patentanspruches 1.

Eine derartige Vorrichtung ist aus EP 1 593 533 A2 bekannt. Die bekannte Vorrichtung beinhaltet ein hakenförmiges Werkzeug, welches in zwei Anlenkstellen über Parallellenker an einem Werkzeughalter beweglich gelagert ist. Das eine Ende des Werkzeugs ist als hakenförmiges Eingriffsende ausgebildet und greift beim Demontieren des Luftreifens von der Felge am Reifenwulst an. Am anderen Ende des Werkzeugs befindet sich eine Anlenkstelle, die über einen der beiden Lenkerhebel gelenkig mit dem Werkzeughalter verbunden ist. Der Lenkerhebel ist an seinem einen Ende mit der Anlenkstelle verbunden und ist an seinem anderen Ende drehfest mit einem Zahnrad verbunden, welches zu einem am Werkzeughalter gelagerten Zahnradgetriebe gehört. Das Zahnradgetriebe besitzt ein weiteres am Werkzeughalter drehbar gelagertes Zahnrad, welches mittels eines Steuerteils in Drehung zur Steuerung der Werkzeugbewegung versetzt werden kann. Eine zwischen den beiden Enden des Werkzeugs liegende zweite Anlenkstelle ist über einen zweiten Lenkerhebel am Werkzeughalter abgestützt. Zur Bewegungssteuerung des Werkzeugs beim Montieren und Demontieren des Luftreifens sind eine relativ große Anzahl an gelenkig miteinander verbundenen Bauteilen erforderlich.

Aufgabe der Erfindung ist es eine Vorrichtung der eingangs genannten Art zu schaffen, bei welcher die gesteuerte Werkzeugbewegung mit einer einfachen Bewegungssteuereinrichtung erreicht wird.

Diese Aufgabe wird erfindungsgemäß durch die Merkmale des Patentanspruches 1 gelöst. Die Unteransprüche beinhalten vorteilhafte Weiterbildungen der Erfindung.

Bei der Erfindung wird die Anlenkstelle, welche an dem zum hakenförmigen Eingriffsende entgegengesetzt liegenden Werkzeugende sich befindet, in einer am Werkzeughalter befestigten Gleitführung geführt. Die zwischen den beiden Werkzeugenden befindliche Anlenkstelle ist über einen Lenkerhebel mit einem Zahnrad des Zahnradgetriebes verbunden, wobei dieses Zahnrad drehfest am Lenkerhebelende befestigt ist. Die beiden Zahnräder des Zahnradgetriebes sind drehbar am Werkzeughalter insbesondere am untenliegenden Ende des etwa vertikal angeordneten Werkzeughalters beispielsweise an einer Betätigungsplatte gelagert.

Bei der Erfindung wird die von einem Steuerteil auf das Zahnradgetriebe übertragene Drehbewegung auf das Zahnrad übertragen, welches drehfest mit dem etwa in der Werkzeugmitte angelenkten Lenkerhebel drehfest verbunden ist. Bei der Werkzeugbewegung wird somit die Steuerbewegung und auch die Krafteinleitung, welche zum Abheben des Reifenwulstes von der Felge erforderlich ist, näher zur hakenförmigen Eingriffsstelle in das Werkzeug eingeleitet, als beim Stand der Technik. Die andere Anlenkstelle des Werkzeugs am Werkzeughalter, welche am entgegengesetzt zur hakenförmigen Eingriffsstelle liegenden Ende des Werkzeugs liegt, wird in der Gleitführung am Werkzeughalter abgestützt und geführt. Diese Gleitführung ist bogenförmig ausgebildet und verläuft vorzugsweise um die Schwenkachse des Zahnrades des Zahnradgetriebes, auf welches die Bewegung des Steuerteils vorzugsweise über einen Betätigungshebel, an welchem das Zahnrad drehfest befestigt ist übertragen wird.

Anhand der Figuren wird an einem Ausführungsbeispiel die Erfindung noch näher erläutert. Es zeigt:
- Fig. 1:: eine Montier-/Demontiermaschine für Luftreifen von Kraftfahrzeugrädern;
- Fig. 2:: in Seitenansicht ein Ausführungsbeispiel für eine Vorrichtung zum Demontieren eines Luftreifens in einer ersten Betriebsstellung, welche bei der in Fig. 1 dargestellten Maschine zum Einsatz kommt; und
- Fig. 3:: die in Fig. 1 dargestellte Vorrichtung in einer zweiten Betriebsstellung.

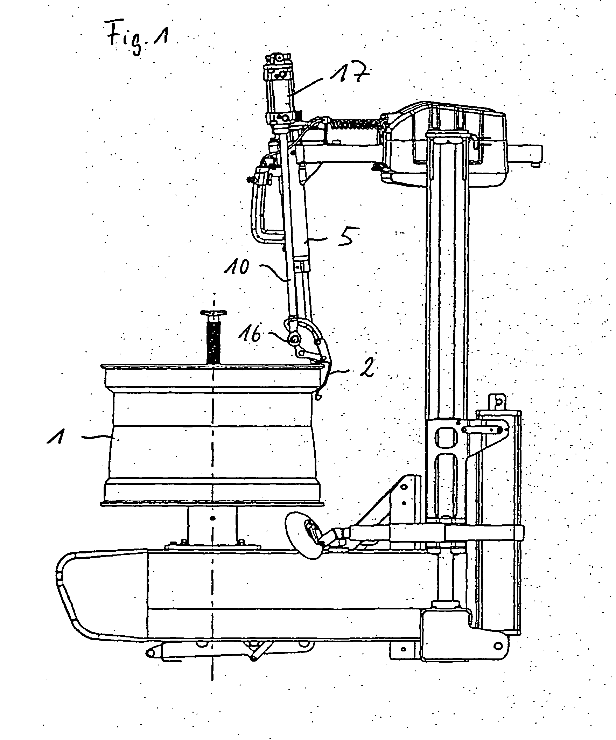

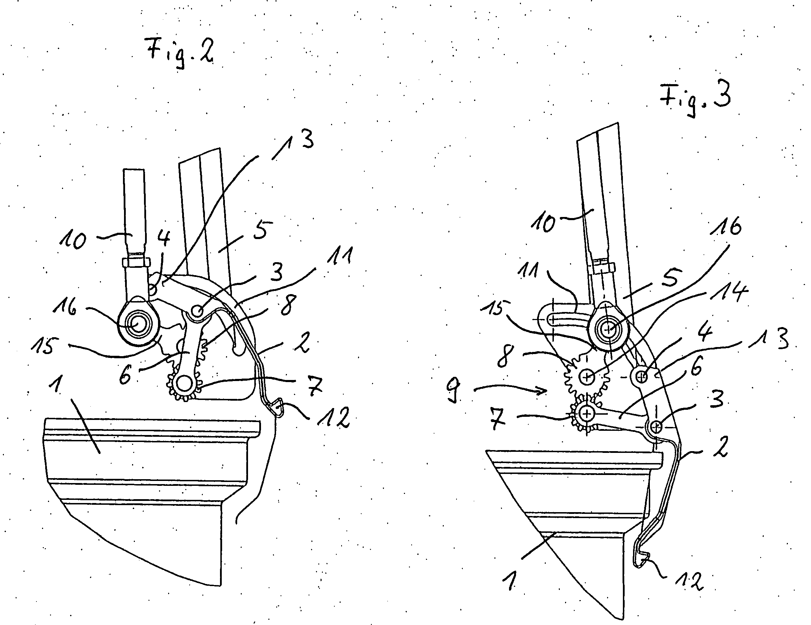

In Figur 1 ist eine Montier-/Demontiermaschine dargestellt mit welcher Luftreifen auf Felgen von Kraftfahrzeugrädern montiert und von den Felgen entfernt werden können. Die dargestellte Maschine besitzt eine Drehlagerung für ein Kraftfahrzeugrad oder eine Felge 1 eines Kraftfahrzeugrades. Beim Montieren und Demontieren kann mittels eines im Maschinengehäuse vorgesehenen Motors die festgespannte Felge 1 bzw. das Rad gedreht werden. An einem Maschinenrahmen und einem Ausleger ist ein Werkzeughalter 5, welcher sich in vertikaler Richtung erstreckt, gehalten. Am unteren Ende des Werkzeughalters 5 befindet sich ein Werkzeug 2 mit welchem ein nicht näher dargestellter Luftreifen von der Felge 1 demontiert werden kann. Einzelheiten des Werkzeugs sowie dessen Bewegungssteuerung werden im Folgenden anhand der Figuren 2 und 3 erläutert.

Das Werkzeug 2, welches vorzugsweise zum Demontieren des Luftreifens von der Felge 1 dient, ist an seinem einen Ende (unteres Ende) zu einem hakenförmigen Eingriffsende 12 geformt. Hieran schließt sich ein etwa geradlinig verlaufender Werkzeugteil an, durch den gewährleistet ist, dass das hakenförmige Eingriffsende 12 zur Erfassung des Reifenwulstes in das Felgenbett bewegt werden kann. Dieses Werkzeugteil ist mit einem Anlenkstellen 3 und 4 aufweisenden Werkzeugteil fest verbunden. Über die Anlenkstellen 3 und 4 erfolgt eine gelenkige Abstützung des Werkzeugs 2 am Werkzeughalter 5.

Am oberen Ende 13 des Werkzeugs 2, das heißt an dem Ende des Werkzeugs, welches dem hakenförmigen Eingriffsende 12 entgegengesetzt liegt, befindet sich die Anlenkstelle 4, welche in einer Gleitführung 11 geführt wird. In der Anlenkstelle 4 können zur reibungsarmen Führung eine oder mehrere Rollen vorgesehen sein, welche in der Gleitführung 11 abrollend zu bewegen sind. Die Gleitführung 11 ist beim dargestellten Ausführungsbeispiel als gebogener Schlitz ausgebildet. Es kann auch eine offene Gleitfläche oder dergleichen als Gleitführung 11 verwendet werden. Die Gleitführung kann auch als gebogene Rührungskante oder Kulisse ausgebildet sein.

Die zweite Anlenkstelle 3 ist über einen Lenkerhebel 6 am Werkzeughalter 5 abgestützt. Das eine Ende des Lenkerhebels 6 ist gelenkig mit dem Werkzeug 2 in der Anlenkstelle 3 verbunden. Das andere Ende des Lenkerhebels 6 ist drehfest mit einem Zahnrad 7 verbunden. Das Zahnrad 7 ist drehbar am Werkzeughalter 5 gelagert.

Ein zweites Zahnrad 8, welches mit dem Zahnrad 7 kämmt, ist ebenfalls drehbar am Werkzeughalter 5 gelagert. Die beiden Zahnräder 7 und 8 bilden ein Zahnradgetriebe. Mit dem Zahnrad 8 ist drehfest ein Betätigungshebel 15 verbunden, welcher in einem Gelenk 16 mit einem Steuerteil 10 verbunden ist. Das Steuerteil 10 ist stabförmig ausgebildet und kann von einer als Kolben-/Zylinderanordnung ausgebildeten Betätigungseinrichtung 17 (Fig. 1) hydraulisch oder pneumatisch betätigt werden. Die Betätigungseinrichtung 17 und das stabförmige Steuerteil 10 sind so am Ausleger der Maschine schwenkbar gelagert, dass das untere Ende des Steuerteils 10, welches im Gelenk 16 mit dem Zahnrad 8 über dem Betätigungshebel 15 verbunden ist, innerhalb eines bestimmten Winkelbereiches eine teilkreisförmige Bewegung ausführen kann. Diese Drehbewegung wird auf das Zahnrad 7 und von dort über den Lenkerhebel 6 auf die Anlenkstelle 3 am Werkzeug 2 übertragen. Die Anlenkstelle 3 befindet sich zwischen den beiden Enden des Werkzeugs 2 an denen das hakenförmige Eingriffsende 12 und die andere Anlenkstelle 4 vorgesehen sind.

Die Gleitführung 11 ist gebogen ausgebildet und erstreckt sich um die kompakte Anordnung des Getriebes 9, gegebenenfalls etwa um die Drehachse 14 des Zahnrades 8. Bei der Hubbewegung des stabförmigen Steuerteiles 10 wird das untere Ende des Steuerteiles 10 und das Gelenk 16 geschwenkt, wobei wie schon erläutert diese Schwenkbewegung über das Zahnradgetriebe 9 auf die Anlenkstelle 3 übertragen wird. Dabei kann das Werkzeug 2 zwischen den beiden Endstellungen, die in den Figuren 2 und 3 dargestellt sind, bewegt werden.

In der Figur 2 ist die Ruheposition dargestellt und in der Figur 3 die Position, bei welcher das Werkzeug und insbesondere das hakenförmige Eingriffsende 12 des Werkzeuges 2 zwischen der Felge und dem Reifen zur Erfassung des Reifenwulstes in Position gebracht ist. Durch entsprechende Verschwenkung des Gelenkes 16 am unteren Ende des Steuerteiles 10 aus der in Figur 3 dargestellten Position in die in Figur 2 dargestellte Position, wird die entsprechende Drehbewegung über das Zahnradgetriebe 9 auf die Anlenkstelle 3 am Werkzeug 2 übertragen. Dabei wird das Werkzeug 2 in die in Figur 2 dargestellte Position gebracht, wobei die Anlenkstelle 4 entlang der gebogenen Gleitführung 11 bewegt wird. Die Anlenkstelle 3 wird um die Drehachse des Zahnrades 7 geschwenkt. Die gesteuerte Bewegung des Werkzeuges 2 wird ferner dadurch erreicht, dass die Anlenkstelle 3 um die entlang der Gleitführung 11 bewegte Anlenkstelle 4 geschwenkt wird.

Bei dieser Bewegung wird der Reifenwulst von der Felge 1 abgehoben, so dass der Reifen von der Felge 1 demontiert werden kann. Bei der entgegengesetzten Bewegung wird das hakenförmige Eingriffsende 12 zwischen die Felge 1 und dem Reifern zur Erfassung des Reifenwulstes bewegt.

Da das Werkzeug 2 bei der Erfindung am Werkzeughalter 5 exakt auf einer bestimmte Bewegungsbahn geführt wird, kann auch eine reifen- und felgenschonende Bewegungsführung des Werkzeuges 2 erreicht werden.

### Bezugszeichenliste

- 1: Felge
- 2: Werkzeug
- 3: Anlenkstelle
- 4: Anlenkstelle
- 5: Werkzeughalter
- 6: Lenkerhebel
- 7: Zahnrad
- 8: Zahnrad
- 9: Zahnradgetriebe
- 10: Steuerteil
- 11: Gleitführung
- 12: hakenförmiges Eingriffsende
- 13: Werkzeugende
- 14: Drehachse
- 15: Betätigungshebel
- 16: Gelenk
- 17: Betätigungseinrichtung

## Patentansprüche

1. Vorrichtung zum Montieren oder Demontieren eines Luftreifens von einer Felge (1) eines Fahrzeugrades mit einem hakenförmigen Werkzeug (2), welches in zwei Anlenkstellen (3, 4) an einem Werkzeughalter (5) beweglich gelagert ist, wobei die eine Anlenkstelle (3) über einen Lenkerhebel (6) mit einem Zahnrad (7) eines am Werkzeughalter (5) gelagerten Zahnradgetriebes (9) verbunden ist, und mit einem weiteren Zahnrad (8) des Zahnradgetriebes (9) verbundenen Steuerteil (10) zur Steuerung der Werkzeugbewegung, **dadurch gekennzeichnet, dass** die andere Anlenkstelle (4) in einer am Werkzeughalter (5) befestigten Gleitführung (11) geführt ist.

2. Vorrichtung nach Anspruch 1, **dadurch gekennzeichnet, dass** die in der Gleitführung (11) geführte Anlenkstelle (4) an dem zum hakenförmigen Eingriffsende (12) entgegengesetzt liegenden Ende (13) des Werkzeugs (2) vorgesehen ist.

3. Vorrichtung nach Anspruch 1 oder 2, **dadurch gekennzeichnet, dass** die mit dem Lenkerhebel (6) verbundene Anlenkstelle (4) zwischen den beiden Enden (12, 13) des Werkzeugs (2) liegt.

4. Vorrichtung nach einem der Ansprüche 1 bis 3, **dadurch gekennzeichnet, dass** das eine Ende des Lenkerhebels (6) drehfest mit dem Zahnrad (7) und das andere Ende des Lenkerhebels (6) gelenkig mit der zwischen den beiden Enden (12, 13) des Werkzeugs (2) liegenden Anlenkstelle (4) verbunden sind.

5. Vorrichtung nach einem der Ansprüche 1 bis 4, **dadurch gekennzeichnet, dass** die Gleitführung (11) einen gebogenen Verlauf aufweist.

6. Vorrichtung nach einem der Ansprüche 1 bis 5, **dadurch gekennzeichnet, dass** der Verlauf der Gleitführung (11) um das Zahnradegetriebe (9) und insbesondere um die Drehachse (14) des mit dem Steuerteil (10) verbundenen Zahnrades (8) gebogen ist.

7. Vorrichtung nach einem der Ansprüche 1 bis 6, **dadurch gekennzeichnet, dass** das Steuerteil (10) über einen mit dem Zahnrad (8) drehfest verbundenen Betätigungshebel (15) mit dem Zahnrad (8) verbunden ist.

8. Vorrichtung nach einem der Ansprüche 1 bis 7, **dadurch gekennzeichnet, dass** das Steuerteil (10) gelenkig mit dem Betätigungshebel (11) verbunden ist.

9. Vorrichtung nach einem Ansprüche 1 bis 8, **dadurch gekennzeichnet, dass** der Betätigungshebel (15) drehfest mit dem Zahnrad (8) des Zahnradgetriebes verbunden ist.

10. Vorrichtung nach einem der Ansprüche 1 bis 9, **dadurch gekennzeichnet, dass** die zwischen den beiden Werkzeugteilen (12, 13) vorgesehene Anlenkstelle (3) um die Schwenkachse des Lenkerhebels (6) und um die entlang der Gleitführung (11) geführte Anlenkstelle (4) schwenkbar ist.

11. Vorrichtung nach einem der Ansprüche 1 bis 10, **dadurch gekennzeichnet, dass** die Gleitführung (11) von einer offenen Führungsfläche oder Führungskante gebildet wird.

12. Vorrichtung nach einem der Ansprüche 1 bis 10, **dadurch gekennzeichnet, dass** die Gleitführung (11) von einem gebogenen Schlitz oder Kulisse gebildet ist.

## Claims

1. A device for mounting or demounting a pneumatic tire to or from a rim (1) of a vehicle wheel, comprising a hook-shaped tool (2) which is movably mounted to a tool holder (5) in two articulation points (3, 4), wherein the one articulation point (3) is connected by means of a link lever (6) to a gear wheel (7) of a gear transmission (9) mounted on the tool holder (5), and a control part (10) connected to a further gear wheel (8) of the gear transmission (9) for controlling the movement of the tool, **characterized in that** the other articulation point (4) is guided in a sliding guide (11) attached to the tool holder (5).

2. A device according to claim 1, **characterized in that** the articulation point (4) which is guided in the sliding guide (11) is provided on the end (13) of the tool (2) which is disposed opposite to the hook-shaped engagement end (12).

3. A device according to claim 1 or 2, **characterized in that** the articulation point (3) which is connected to the link lever (6) is disposed between the two ends (12, 13) of the tool (2).

4. A device according to one of the claims 1 to 3, **characterized in that** the one end of the link lever (6) is connected non-rotatably to the gear wheel (7) and the other end of the link lever (6) is connected in an articulated manner to the articulation point (3) which is disposed between the two ends (12, 13) of the tool (2).

5. A device according to one of the claims 1 to 4, **characterized in that** the sliding guide (11) has a curved path.

6. A device according to one of the claims 1 to 5, **characterized in that** the path of the sliding guide (11) is curved around the gear transmission (9) and in particular around the rotational axis (14) of the gear wheel (8) which is connected to the control part (10).

7. A device according to one of the claims 1 to 6, **characterized in that** the control part (10) is connected to the gear wheel (8) by means of an actuating lever (15) which is connected non-rotatably to the gear wheel (8).

8. A device according to one of the claims 1 to 7, **characterized in that** the control part (10) is connected in an articulated manner to the actuating lever (15).

9. A device according to one of the claims 1 to 8, **characterized in that** the actuating lever (15) is connected non-rotatably to the gear wheel (8) of the gear transmission.

10. A device according to one of the claims 1 to 9, **characterized in that** the articulation point (3) provided between the two tool parts (12, 13) is pivotable about the pivot axis of the link lever (6) and about the articulation point (4) which is guided along the sliding guide (11).

11. A device according to one of the claims 1 to 10, **characterized in that** the sliding guide (11) is formed by an open guide surface or guide edge.

12. A device according to one of the claims 1 to 10, **characterized in that** the sliding guide (11) is formed by a curved slot or slideway.

## Revendications

1. Dispositif de montage ou de démontage d'un pneumatique d'une jante (1) d'une roue de véhicule, comprenant un outil (2) en forme de crochet, qui est monté mobile en deux points (3, 4) d'articulation sur un porte-outil (5), l'un des points (3) d'articulation étant relié par un levier (6) de commande à une roue (7) dentée d'un engrenage (9) monté sur le porte-outil (5), et comprenant une partie (10) de commande reliée à une autre roue (8) dentée de l'engrenage (9), pour commander le mouvement de l'outil, **caractérisé en ce que** l'autre point (4) d'articulation est guidé dans un guidage (11) à glissement fixé sur le porte-outil (5).

2. Dispositif suivant la revendication 1, **caractérisé en ce que** le point (4) d'articulation guidé dans le guidage (11) à glissement est prévu à l'extrémité (13) de l'outil (2) opposée à l'extrémité (12) de pénétration en forme de crochet.

3. Dispositif suivant la revendication 1 ou 2, **caractérisé en ce que** le point (4) d'articulation relié au levier (6) de commande se trouve entre les deux extrémités (12, 13) de l'outil (2).

4. Dispositif suivant l'une des revendications 1 à 3, **caractérisé en ce qu'**une des extrémités du levier (6) de commande est solidaire en rotation de la roue (7) dentée et l'autre extrémité du levier (6) de commande est articulée au point (4) d'articulation se trouvant entre les deux extrémités (12, 13) de l'outil (2).

5. Dispositif suivant l'une des revendications 1 à 4, **caractérisé en ce que** le guidage (11) à glissement a un tracé courbé.

6. Dispositif suivant l'une des revendications 1 à 5, **caractérisé en ce que** le tracé du guidage (11) à glissement est courbé autour de l'engrenage (9) et, notamment, autour de l'axe (14) de rotation de la roue (8) dentée reliée à la partie (10) de commande.

7. Dispositif suivant l'une des revendications 1 à 6, **caractérisé en ce que** la partie (10) de commande est reliée à la roue (8) dentée par un levier (15) d'actionnement solidaire en rotation de la roue (8) dentée.

8. Dispositif suivant l'une des revendications 1 à 7, **caractérisé en ce que** la partie (10) de commande est articulée au levier (11) d'actionnement.

9. Dispositif suivant l'une des revendications 1 à 8, **caractérisé en ce que** le levier (15) d'actionnement est solidaire en rotation de la roue (8) dentée de l'engrenage.

10. Dispositif suivant l'une des revendications 1 à 9, **caractérisé en ce que** le point (3) d'articulation prévu entre les deux parties (12, 13) de l'outil est monté pivotant autour de l'axe de pivotement du levier (6) de commande et autour du point (4) d'articulation guidé le long du guidage (11) à glissement.

11. Dispositif suivant l'une des revendications 1 à 10, **caractérisé en ce que** le guidage (11) à glissement est formé par une surface de guidage ouverte ou par un bord de guidage.

12. Dispositif suivant l'une des revendications 1 à 10, **caractérisé en ce que** le guidage (11) à glissement est formé par une fente courbée ou par une coulisse.
